# EUROPEAN PATENT SPECIFICATION

(11) **EP 1 646 037 B1**
(45) Date of publication and mention of the grant of the patent: **26.03.2008**
(21) Application number: 05291989.1
(22) Date of filing: 23.09.2005
(51) Int. Cl.: G10L 15/26

(54) **Method and apparatus for enhancing speech recognition accuracy by using geographic data to filter a set of words**
Verfahren und Vorrichtung für erhöhte Spracherkennungspräzision unter Verwendung geografischer Daten zur Filterung einer Wortgruppe
Procédé et appareil pour améliorer la précision de la reconnaissance vocale en utilisant des données géographiques pour filtrer un lot de mots

(30) Priority: 29.09.2004 US 953671
(43) Date of publication of application: 12.04.2006
(73) Proprietor: FRANCE TELECOM, 75015 Paris (FR)
(72) Inventor: Waters, Keith, West Newton MA 02465 (US); Simon, Benoît Benjamin, Boston MA 02114 (US)

(56) References cited:
- EP-A- 0 661 688
- EP-A- 1 233 407
- US-B1- 6 230 132

## Description

### FIELD OF THE INVENTION

The invention relates generally to speech recognition systems and methods and, more particularly, to systems and methods for enhancing speech recognition accuracy by using geographic data to reduce the size of a set of words that must be checked to effect speech recognition.

### BACKGROUND OF THE INVENTION

While visiting an unfamiliar city, a mobile handset user may wish to locate a business, landmark, street, or other place of interest. It would be quite advantageous if the user could place a voice call to a remote server at a designated telephone number, speaking his or her request for information into the handset. The handset would execute a speech recognition procedure, transforming the spoken request into a server query, and receiving the requested information from the remote server in the form of an electronic signal for producing audible speech. For example, a user in Manhattan may wish to locate the closest Neiman Marcus store. She dials a designated telephone number and speaks a request such as "where is the closest Neiman Marcus?" The handset uses speech recognition to convert the request into an electronic query for receipt by the remote server. Based upon the current location of the handset, the remote server accesses a database to retrieve the address and phone number of the nearest Neiman Marcus. The address and phone number are sent from the server to the user's handset in the form of an electronic signal, whereupon the handset converts the electronic signal into audible speech.

Unfortunately, there are significant hurdles to overcome if one wishes to use existing speech recognition algorithms to carry out the foregoing procedures. More specifically, it is a challenge to develop speech recognition algorithms, which provide a desired level of accuracy in certain operational environments, such as that of mobile telephonic devices. In general, the processing power and memory capabilities of mobile telephonic devices are limited by size and cost constraints, thereby placing limits on the extent to which the complexity of existing algorithms can be increased. Moreover, the existence of ambient noise severely degrades the performance of many speech recognition algorithms. In view of these shortcomings, prior art techniques have been developed to improve the performance of speech recognition algorithms in applications where processing power may be limited. These prior art techniques are directed toward enhancing a recognition model by utilizing improved acoustic models. The following definitions are presented herein for purposes of understanding and clarity:

*Lexical Model:* A lexical model breaks down individual words of a syntactic model (defined hereinafter) into a sequence of phonemes (also defined hereinafter).

*Acoustic Model:* An acoustic model breaks down the sequence of phonemes determined by the lexical model into a Markov model of cepstrum coefficients, also termed vector sequences. Cepstrum coefficients are generated by taking the Fourier Transform of the power spectrum of a speech signal.

*Recognition Model:* A recognition model is a set of rules and operations that are used by a recognition engine to recognize individual words. The recognition model includes a fully deployed speech recognition system which encompasses the acoustic model, the lexical model and the syntactic model as follows: recognition model = (acoustic model) x (lexical model) x (syntactic model).

U.S. Patent Application Publication No. US2003236099 discloses a technique for improving the accuracy of a speech recognition algorithm by selecting an appropriate acoustic model in accordance with the location of a mobile telephonic device ("mobile handset", or just "handset" for the sake of convenience). As indicated above, an acoustic model includes a set of cepstrum coefficient statistics for each phoneme in a language. Several different acoustic models can be precompiled, each representing a unique acoustical environment, such that a speech recognition system can select an acoustic model appropriate for a given set of environmental conditions. For example, each acoustic model is prepared by individually recording several hundred speakers in a controlled, model-specific laboratory environment that has known acoustical properties illustratively specified in terms of noise, echo, reverberation, and frequency response. Each model-specific laboratory environment is intended to represent a real-world environment, such as a warehouse, an office, a shopping mall, an airport, or the interior of an automobile. Hence, acoustic models incorporate properties of specific environments as well as characteristics of the human voice. The laboratory environment may include artificially generated sounds to simulate, for example, traffic, conversations, computer keyboard clicks, and forklift trucks.

Pursuant to this prior art technique, position information is retrieved from a location-based service (LBS), as defined hereinafter, based upon the current location of the mobile handset. The retrieved position information is then employed to select the acoustical properties of the environment surrounding the handset. An acoustic model that approximates the acoustical properties of the type of environment for the current location of the handset is selected from a set of previously prepared acoustic models. The selected acoustic model is then utilized to improve the accuracy of the speech recognition algorithm.

The technique disclosed in U.S. Patent Application Publication No. US2003236099 presents many practical shortcomings. Existing location-based services, using the Global Positioning System (GPS), will not determine a user's position to a requisite accuracy of, say, one to two meters, nor will such services determine a user's altitude with sufficient accuracy for many speech recognition applications. The impact of insufficient position accuracy is that, if a user is situated near the entrance of a building, it is not possible to accurately determine whether the user is, in fact, inside the building. The impact of insufficient altitude accuracy is that it is not possible to determine with certainty whether a user is within the building or standing on the roof. An acoustic model that is appropriate for an interior building lobby is unlikely to be totally appropriate for use in an outdoor setting. At the very least, selection of an inappropriate acoustic model based upon an inaccurate determination of a user's actual position will degrade the accuracy of many speech recognition algorithms.

Another shortcoming of the technique disclosed in U.S. Patent Application Publication No. US2003236099 is the need for creating an acoustic model. First of all, it is not feasible to create a unique acoustic model for every type of location. Secondly, even if an acoustic model is developed for a certain type of location, an actual location may not possess the acoustical characteristics embodied in the model. For example, due to variations in construction materials, furnishings, and room configurations, an acoustic model that attempts to represent a typical conference room, for example, may not adequately represent a specific conference room in a specific office building. Accordingly, what is needed is an improved technique for improving the accuracy of speech recognition algorithms.

EP1233407 recites a navigation system with speech recognition capacities for a moving vehicle. Whenever the distance between the vehicle and known active locations becomes greater then a given threshold, a pre-existing word list, corresponding to the active location, is acquired by the navigation system for subsequent use with the speech recognition engine.

US6230132 recites another navigation system with speech recognition functions. A lexicon is generated at periodic intervals with a limited number of words so as to facilitate the speech recognition functions. Furthermore, when a user needs to use the navigation system, he/she has to make a vocal request with the name of a location so that a lexicon can be generated.

EP0661688 recites a single device navigation apparatus, on board a car, with speed recognition functions. Pre-existing libraries are used and updated at regular intervals to facilitate the speech recognition engine.

### SUMMARY OF THE INVENTION

The present invention is defined by the appended independent claims.

Other aspects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that, unless otherwise indicated, the drawings are merely intended to conceptually illustrate the structures and procedures described herein.

### BRIEF DESCRIPTION OF THE DRAWINGS

In the drawings:

FIG. 1 is a diagrammatic representation of a geographic area of interest.

FIG. 2 is a data structure diagram setting forth a portion of an illustrative element database.

FIG. 3 is a data structure diagram setting forth an illustrative subset of words selected from the element database of FIG. 2.

FIG. 4 is a generalized information flow diagram showing a set of fundamental operations for the present invention.

FIG. 5 is a detailed block diagram setting forth information flow for a speech recognition system constructed in accordance with a preferred embodiment of the present invention.

### DETAILED DESCRIPTION OF THE DRAWINGS

The following terms used herein are defined as follows:

*Geographic Area of Interest:* Illustratively defined in terms of a zip code, group of zip codes, cell identification (Cell-ID) information, caller ID (Call-ID) information, the boundaries of a state, county, city, town, place, or other governmental or municipal subdivision, standard USGS (United States Geological Survey) grids, locations within a fixed range of latitude and longitude, or locations within a specified geometric boundary. The geographic area of interest may, but need not, be set automatically based upon the present location of a handset. The geographic area of interest may, but need not, be designated by a user based upon manual, verbal, or user-specified input. The geographic area of interest can be a coarse geographic area of interest or a refined geographic area of interest, with the latter being a portion of the former.

*E911:* As mandated by the FCC (Federal Communications Commission), a standard for a system by which wireless carriers are able to pinpoint the location of a mobile device in an emergency.

Element: Name of at least one of a street, a business, a merchant, an individual's name, a place, a point of interest, a transportation facility, an individual household, an activity, and a landmark.

*GPS*: Global Positioning System -- Enables geographic position determination at a land-based portable device equipped to receive signals from three or more orbiting GPS satellites.

*LBS:* Location-Based Service -- Any service that obtains information concerning the current geographical location of a mobile device user. Illustrative examples of location-based services include maps displayed in an automobile that track a motorists' position using GPS, or automatic localization services provided by dialing 911 on an E911-compliant mobile telephone network.

*Mobile Device:* Any portable device enabled for wireless communication, such as a wireless telephone, a personal digital assistant, or a laptop computer equipped with a wireless modem.

*Phoneme:* A phoneme represents a unique human uttered sound. Individual words, as pronounced by a human speaker, consist of a sequence of phonemes.

*Syntactic Model:* A set of rules and operations that specify allowed word sequences (phrases) of one or more words for subsequent use in a speech recognition procedure. Allowed word sequences are set forth in a list of static allowed phrases. In addition, the phrases can be optionally weighted by occurrence probabilities. Otherwise, word sequences can be in the form of stochastic or probabilistic lists, such as a Markov model of word sequences. Syntactic models are usually designed to be specific to a particular speech engine.

*Word:* A unit of language that native speakers can identify, and which communicates a meaning. Words are the building blocks from which phrases and sentences are constructed. Illustratively, for elements, "The Empire State Building" is the name of an element that contains four words. A street with the name "125^{th} Street" includes the six words "one hundred and twenty fifth street". The street name "K Street" has the words "K" (which is a word for purposes of this invention) and "street".

The invention presumes that a very large element database is available for some sizeable, designated geographic area, such as a city, state, county, or country. One example of a known element database is TIGER (Topologically Integrated Geographic Encoding and Referencing system), available from the United States Census Bureau. TIGER compounds localized street names, rivers and railroads into a series of large regional databases.

The element database contains a set of words for elements at locations that are within the designated geographic area. In accordance with an aspect of the invention, enhanced speech recognition accuracy is provided by using geographic data to automatically select a subset of the words in the element database for use with a speech recognition procedure. The subset of words is selected by selecting only those words in the element database that are situated within a geographic area of interest. The geographic area of interest, either coarse or refined (depending on the circumstances, as explained below) is illustratively defined in terms of a zip code, group of zip codes, cell identification (Cell-ID) information, caller ID (Call-ID) information, the boundaries of a state, county, city, town, place, or other governmental or municipal subdivision, standard USGS (United States Geological Survey) grids, locations within a fixed range of latitude and longitude, or locations within a specified geometric boundary.

By selecting a subset of words, the total number of words used in the speech recognition procedure is substantially reduced. For example, a large element database containing street and business names used throughout all five boroughs of New York City can be reduced to a substantially shorter list of street and business names covering only the Grand Central Station area by specifying zip code 10017. Such a reduction in the total number of potential street names to be recognized, significantly improves speech recognition accuracy.

Pursuant to a further aspect of the invention, position information is obtained from an LBS based upon the current location of a mobile handset, illustratively using any of GPS coordinates, zip codes, and cellular base station triangulation. The obtained position information can be utilized to automatically define a coarse geographic area of interest. Let us say, as an example, that zip codes are used for this purpose. Thus, once the current location of the handset is determined, the zip code which includes that location automatically becomes the coarse geographic area of interest. Typically, the system can determine which localization method to use based on a knowledge of call configuration. For example, when a call is initiated, the Cell-ID can be used to determine the approximate location of the device. Alternatively, the application itself can choose which methods to employ, or the application can prompt the user to select which method to use. An illustrative prompt might include "*Do you want to use Cell-ID, or GPS to determine you location?"*

In accordance with a further aspect of the invention, an interface enables a user to refine the coarse geographic area of interest. For example, the user can select a specified geometrical shape within the coarse geographic area centered about the current location of the handset. This can be accomplished using key-based entries. Also, a graphical user interface can be used to draw a geometrical shape within the coarse geographic area. Additionally or alternatively, a Cell-ID can be specified within the geographic area zip code, thus defining a refined geographic area of interest for which the subset of words is to be selected. Combining automatic definition of a coarse geographic area of interest with additional, user-selectable geometric refinement is advantageous because it further reduces the total number of words that must be used in the speech recognition procedure. For example, a user-selectable rectangular region of 300 x 300 feet may contain only a few dozen elements that need to be recognized.

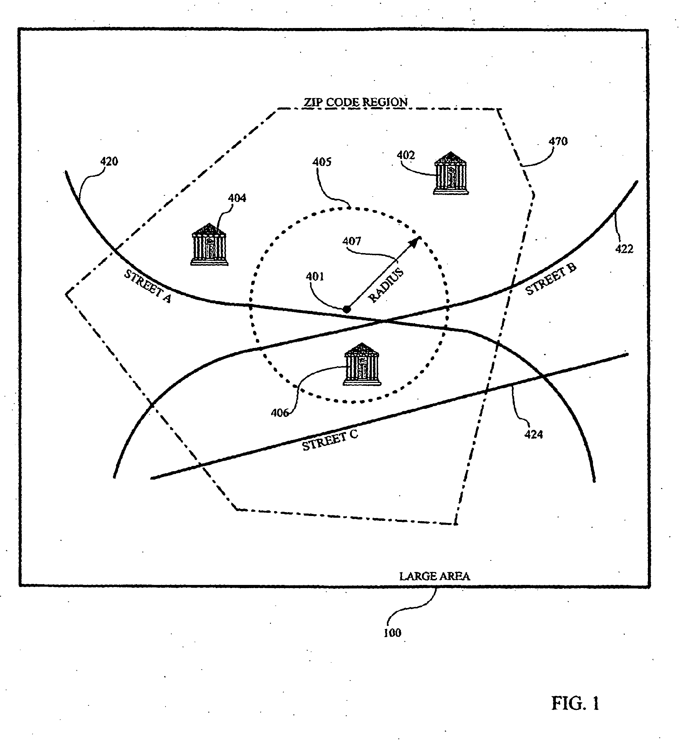

FIG. 1 is a diagrammatic representation of a geographic region of interest contained within a large area 100, such as a city. The current geographic location of a mobile device is determined to be point 401. In this illustrative example, the coarse geographic area of interest is defined by the zip code. Thus, the coarse geographic area of interest is defined by Zip code region 470 within which point 401 is located. A mobile device user has selected a specific radius 407 around point 401 for defining the refined geographic area of interest. Elements contained (in whole or in part) within this coarse geographic area include Street A 420, Street B 422, and a first building 406. Elements contained within this coarse geographic area of interest but which are not within this refined geographic area include Street C 424, second building 404, and third building 402.

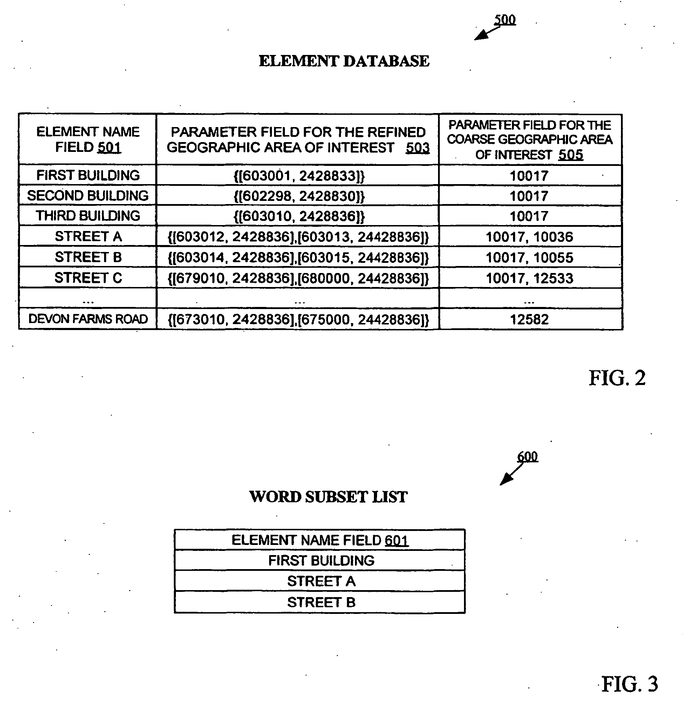

An element database (FIG. 2, 500) includes a list of element names for at least one of streets, businesses, merchants, places, points of interest, transportation facilities, individual households, activities, or landmarks in large area 100 (FIG. 1). This database can be part of the LBS database. Each element name is associated with one or more corresponding parameters for identifying or associating the element with a refined geographic area of interest, and a parameter for identifying or associating the element with a coarse geographic area of interest. A set of phonemes corresponding to the element name can be computed in real time by recognition model compiler 213, using the outputted element name (501) in conjunction with a phonetizer. A phonetizer is a mechanism that provides phonemic transcriptions for each of a plurality of element names. Phonemic transcriptions comprise a phoneme, or a sequences of two or more phonemes, which indicate the manner in which an element name may be spoken. Illustratively, the element name "Madison" has a corresponding phonemic transcription "mäd 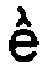 sun".

Element names are stored in an element name field 501. Each name in element name field 501 is associated with a corresponding parameter field (x,y) for the refined geographic area of interest 503, and a corresponding parameter field for the coarse geographic area of interest 505. These element names may or may not include elements that are within whatever refined geographic area of interest is selected by the user during operation of the invention (in this example, defined by radius 407 around point 401 of FIG. 1).

Refined geographic parameters are stored in the parameter field for the refined geographic area of interest 503 (FIG. 2). A refined geographic parameter sets forth a characteristic of an element in terms of how the refined geographic area of interest is defined. For example, if the refined geographic area is defined by the user as a shape (e.g., a circle) around the current location of the handset, the refined geographic parameters comprise (x,y) coordinates. In the illustrative example of FIG. 2, the refined geographic parameters are (x,y) coordinates determined with respect to an arbitrarily assigned reference point. When a first set and a second set of (x,y) coordinates are present in the parameter field for the refined geographic area of interest 503, this represents a line segment between the first set of (x,y) coordinates and the second set of (x,y) coordinates. Such a segment is used, for example, to define a street that extends from the first set of (x,y) coordinates to the second set of (x,y) coordinates.

Coarse geographic parameters are stored in the parameter field for the coarse geographic area of interest 505. A coarse geographic parameter sets forth a characteristic of an element in terms of how the coarse geographic area of interest is defined. For example, if the coarse geographic area of interest is defined in terms of one or more zip codes, the coarse geographic parameters in the parameter field for the coarse geographic area of interest 505 comprise one or more zip codes. For example, if Street A 420 (FIG. 1) crosses into two different zip code regions, then the parameter field for the coarse geographic area of interest 505 includes two zip codes, such as 10017 and 10036. However, other types of coarse geographic parameters could be employed to relate the element to a zip code system, such as standard USGS (United States Geological System) grids, regions within a fixed range of latitude and longitude, state boundaries, county boundaries, city boundaries, and/or boundaries of urbanized areas. For example, a lookup table could be used to determine the foregoing relationship.

Returning now to FIG. 1, and in accordance with one feature of the invention, only words corresponding to elements within the geographic area of interest are extracted from element database 500 (FIG. 2) to form word subset list 600 (FIG. 3). If the user defines the refined geographic area of interest as shown in FIG. 1, the limited set of words does not include Street C 424, second building 404, and third building 402. Use of this limited set of words enhances the accuracy of a subsequently performed speech recognition procedure because words pertaining to each and every element of large area 100 of FIG. 1 need not be considered.

FIG. 3 is a data structure diagram setting forth a portion of an illustrative word subset list 600. The names of one or more elements within the geographic area of interest are stored in an element name field 601. Optionally, word subset list 600 may include additional information, such as the probability that a particular element will be incorporated into a user's query based upon the distance of that element from the current position of the mobile device, so as to provide an enhanced level of performance.

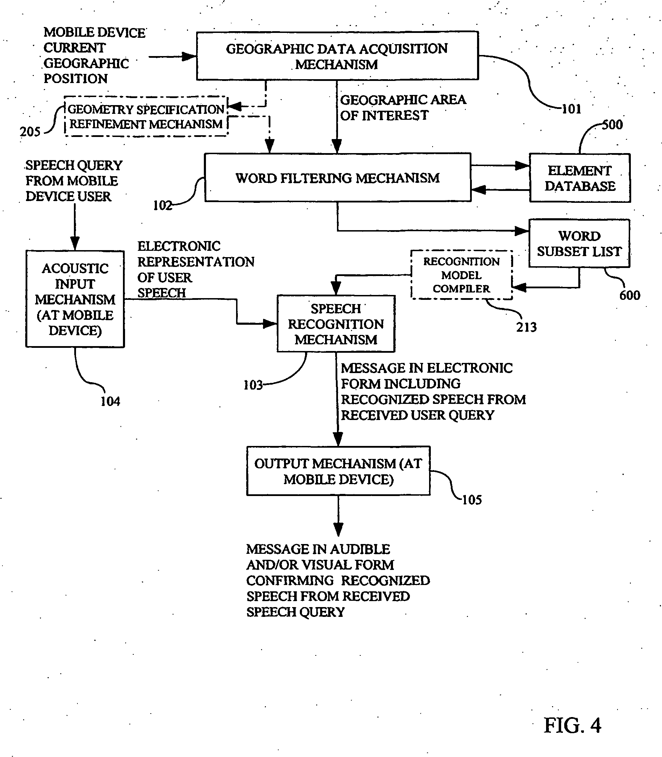

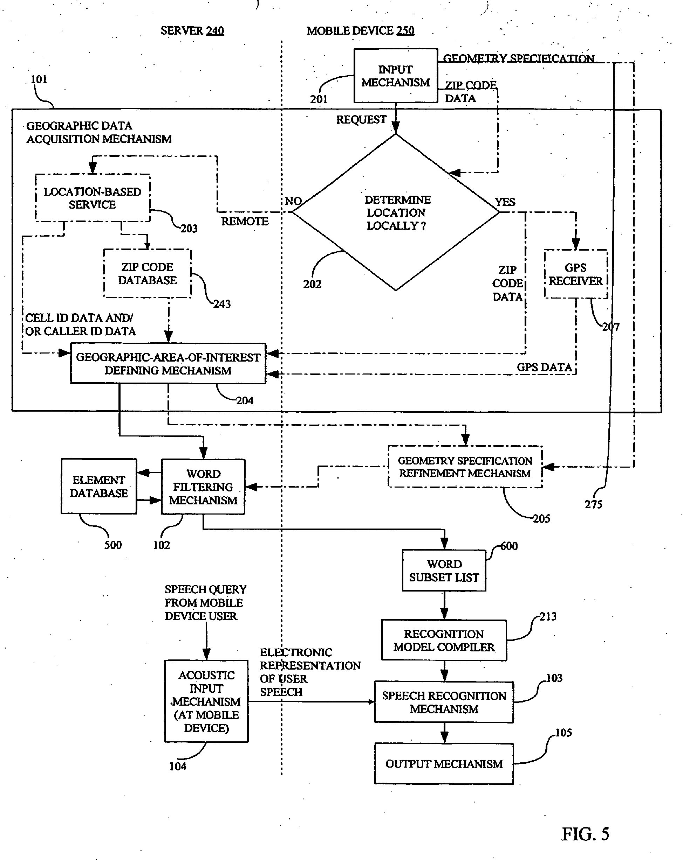

FIG. 4 is a generalized information flow diagram describing a set of fundamental operations for the present invention. Geographic data acquisition mechanism 101 (the details of which are shown in FIG. 5) is equipped to collect geographic data corresponding to a mobile device's current geographic position and, based thereon, to determine and output a geographic area of interest. Geographic data includes, but is not limited to, any of: global positioning system (GPS) coordinates in latitude and longitude, and also altitude if needed, [x,y,z] coordinates, city name, place name, zip code area, geographic area, type of area (urban, suburban or country), one or more cell identification (Cell-ID) parameters from a cellular network, or a caller identification (Call-ID) parameter from a terrestrial telephone network.

Word filtering mechanism 102 is equipped to receive a geographic area of interest from geographic data acquisition mechanism 101 and, based thereupon, select a subset of words from element database 500 (FIGs. 2 and 4). If a coarse geographic area of interest is being used, then the subset of words is selected by comparing coarse geographic parameters in the parameter field for the coarse geographic area of interest 505 corresponding to the elements in element name field 501 with coarse geographic parameters used to characterize the geographic area of interest. More specifically, if the coarse geographic area of interest is zip code 10017, then all the element names in element name field 501 will be selected which are associated with zip code 10017 in the parameter field for the coarse geographic area of interest 505. A similar operation is performed if a refined geographic area of interest is used. Of course, the parameter field for the refined geographic area of interest 503 will be used instead of the parameter field for the coarse geographic area of interest 505. The refined geographic parameters are combined with the coarse geographic parameters to enhance the word filtering mechanism 102 by using a two-step filtering process. A first step uses the parameter field for the coarse geographic area of interest 505, and a second step uses the parameter field for the refined geographic area of interest 503.

Word filtering mechanism 102 places the selected subset of words into a word subset list 600 (FIGs. 3 and 4). Speech recognition mechanism 103 (FIG. 4) is equipped to receive word subset list 600 (FIGS. 3 and 4) from word filtering mechanism 102 (FIG. 4) and, based thereupon, perform a speech recognition procedure. Illustratively, speech recognition mechanism 103 may be equipped to implement a speech recognition procedure by utilizing a (syntactic model) x (lexical model) x (acoustic model) paradigm in conjunction with Markov models. Alternatively or additionally, speech recognition mechanism 103 may utilize a neural network. More generally, the invention is applicable to any speech recognition mechanism that accepts and processes words or groups of words referred to as "grammar". Accordingly, word filtering mechanism 102 includes a grammar formatting mechanism that receives the word subset list 600 and formats the list into a grammar format usable by recognition model compiler 213.

Recognition model compiler 213 may or may not be required, depending upon the specific design characteristics of speech recognition mechanism 103. Recognition model compiler 213 parses (or analyzes) all of the entries in a formatted grammar, one after the other, and then, in one or more successive stages or "passes", constructs an output code readable by speech recognition mechanism 103. Since the speech recognition procedure is based upon a geographically refined subset of words, the overall accuracy of this procedure is enhanced relative to prior art designs. Speech recognition mechanism 103 can be implemented by a server or by a mobile handset.

A speech query from a mobile device user is received by an acoustic input mechanism 104 at the mobile device. Acoustic input mechanism 104 may be implemented using a microphone or other transducer equipped to transform acoustical vibrations into electronic signals. Acoustic input mechanism 104 feeds an electronic representation of user speech to speech recognition mechanism 103. Speech recognition mechanism 103 attempts to recognize one or more words in the electronic representation of user speech that are included in word subset list 600 retrieved from element database 500. If one or more words are recognized, speech recognition mechanism 103 sends an electronic message to an output mechanism 105 at the mobile device. The electronic message includes any recognized words in the speech query received from the mobile device user that were also included in word subset list 600. Output mechanism 105 converts the electronic message into audible and/or visual form for perception by the mobile device user. Illustratively, output mechanism 105 may be implemented using a loudspeaker coupled to audio amplifier circuitry and voice synthesizer circuitry for producing an audio message including one or more recognized words. Alternatively or additionally, output mechanism 105 may be implemented using a visual display device for displaying alphanumeric characters including one or more recognized words.

FIG. 5 is a detailed block diagram setting forth information flow for a speech recognition system constructed in accordance with an embodiment of the present invention. FIG. 5 shows details of geographic data acquisition mechanism 101. The depicted operations are performed either by a remote server 240 or by mobile device 250. Information flow commences upon receipt of a "start" signal at input mechanism 201 of mobile device 250. In practice, this "start" signal can be a request issued from a multimodal web page, an HTML page, or just a phone call. Alternatively, a user may place a call on a mobile handset to a designated telephone number to access a zip code form displayed on the mobile handset. The user fills in the zip code form using DTMF keypresses on the handset and validates the entered zip code by pressing DTMF digit "1" as a "start" signal. Basically, the "start" signal triggers a request for information.

Next, at mechanism 202, a decision is made as to whether the geographic area of interest will be determined locally (i.e., at mobile device 250), or at a remote location (i.e., at remote server 240). Depending upon the specifics of a given system application, this decision can be made by issuing a query to mobile device 250 in order to ascertain the configuration and capabilities of mobile device 250.

In cases where the geographic area of interest is determined locally, any one of two approaches may be employed. Pursuant to a first approach, mobile device 250 may include an optional GPS receiver 207, whereupon acquired GPS data are forwarded to a geographic-area-of-interest defining mechanism 204 (server side, see FIG. 5). Mechanism 204 uses the GPS data corresponding to the current location of mobile device 250 to obtain coarse geographic parameters for characterizing the coarse geographic area of interest. According to a second approach, zip code data, for example, can be entered by the user at input mechanism 201 and forwarded to geographic-area-of-interest defining mechanism 204. Illustratively, zip code data are entered into input mechanism 201 by sequentially pressing keys on a DTMF (dual-tone, multifrequency) keypad. Mechanism 204 uses the entered zip code data as a coarse geographic parameter for characterizing the geographic area of interest.

In cases where the geographic area of interest is determined remotely, mechanism 202 forwards the request received from input mechanism 201 to a location-based service 203 at server 240. Alternatively or additionally, GPS data from GPS receiver 207 are conveyed to location-based service 203, if needed. In response to the received request, location-based service 203 retrieves, for example, zip code information or cell identification (Cell ID) data for mobile device 250. Cell-IDs data can be retrieved in a mobile communications network using the Automatic Number Identification (ANI) retrieved from the mobile device 250. ANI is a service that provides the receiver of a telephone call with the number of the calling phone. The method of providing this information is determined by the service provider. Cell ID data specifies the geographic location of the wireless base station currently in communication with mobile device 250 by identifying at least one of the telephone number and the Internet Protocol (IP) address assigned to mobile device 250. For example, mobile device 250 may send to location-based service 203 Cell ID data in the form of an automated number identification (ANI) parameter. Optionally or alternatively, location-based service 203 determines the geographic location of mobile device 250 by performing a triangulation procedure among a plurality of wireless base stations. The Cell ID data, Caller ID data, and/or triangulation data retrieved by location-based service 203 (ultimately through the telecommunication provider) are forwarded to geographic-area-of-interest defining mechanism 204.

Optionally, in cases where the geographic area of interest is determined remotely, LBS service 203 utilizes at least one of Caller ID data and Cell ID data to access a zip code database 243. Based upon the Caller ID data or the Cell ID data, a zip code is retrieved from zip code database 243 and then sent to geographic-area-of-interest defining mechanism 204. Although the illustrative embodiment of FIG. 5 shows zip code database 243 and location-based service 203 as separate elements, those skilled in the relevant art will easily recognize that zip code database 243 could, but need not, be incorporated into location-based service 203. Likewise, although element database 500 and location-based service 203 are shown as separate elements, those skilled in the relevant art will easily recognize that element database 500 could, but need not, be incorporated into location-based service 203.

Geographic-area-of-interest defining mechanism 204 processes incoming geographic data, illustratively comprising at least one of incoming GPS data, zip code data, Caller ID data, or Cell ID data, to generate one or more geographic parameters defining the geographic area of interest for mobile device 250. For example, as discussed above, if the incoming data are based upon zip code data, then the output of mechanism 204 is a zip code. This parameter, e.g., a zip code, is used to specify a geographic area of interest. The defined geographic area of interest may combine a coarse geographic area of interest with a refined geographic area of interest, as is illustrated in the following example. One or more zipcode(s) may be deduced from GPS coordinates, thus defining a coarse geographic area of interest. The GPS coordinates themselves, associated with an area of uncertainty, define a refined geographic area of interest. Such a defined geographic area of interest may be used to implement the two-step filtering process described above.

Optionally, as indicated by the dotted lines of FIG. 5, a user at mobile device 250 may wish to further refine the geographic area of interest defined by geographic-area-of-interest defining mechanism 204. If so, the geographic area of interest defined by geographic-area-of-interest defining mechanism 204 is referred to as a coarse geographic area of interest, and the area of interest as refined by the user is referred to as a refined geographic area of interest. The refined geographic area of interest comprises a subset of the coarse geographic area of interest. Input mechanism 201 accepts user input setting forth a geometric specification of a refined geographic area of interest. User input is illustratively received over connection line 275 in the form of keypad entries, graphical objects, sketches, textual descriptions, or vocal input. Examples of geometric specifications include squares, rectangles, octagons, triangles, circles, and freehand sketches. Geometry specification refinement mechanism 205 accepts user input from input mechanism 201, and refines the set of geographic parameters generated by geographic-area-of-interest defining mechanism 204.

The one or more geographic parameters generated by geographic-area-of-interest defining mechanism 204, as optionally refined by geometry specification refinement mechanism 205, are received by word filtering mechanism 102. Word filtering mechanism 102 is enabled to carry out its functions when two conditions are met. Firstly, mobile device 250 should be executing a speech-enabled application where the user has issued a request for information. This requirement is met upon generation of a request from input mechanism 201. Secondly, the geographic area of interest should be defined. This requirement is met once geographic-area-of-interest defining mechanism 204 generates the above-described geographic parameters.

When enabled, word filtering mechanism 102 uses the one or more geographic parameters received from mechanism 204 or 205 to determine whether or not each of a plurality of elements in element database 500 is situated within the geographic area of interest. The element names stored in element name field 501 (FIG. 2) may include elements that are within the geographic area of interest, as well as elements that do not lie within the geographic area of interest. Accordingly, word filtering mechanism 102 (FIG. 5) compares the one or more received parameters defining the geographic area of interest against one or more parameters stored in at least one of parameter field for the refined geographic area of interest 503 or parameter field for the coarse geographic area of interest 505 (FIG. 2), to determine whether or not each of a plurality of elements in element database 500 (FIGs. 2 and 5) is situated within the geographic area of interest. For example, Street A is characterized in the parameter field for the refined geographic area of interest 503 by a first and a second set of (x,y) coordinates. Accordingly, Street A is conceptualized as including a straight line segment connecting the first and second sets of (x,y) coordinates. If any portion of this straight line segment intersects the geographic area of interest, then Street A is included in word subset list 600 (FIGs. 3 and 5).

Word filtering mechanism 102 appends to word subset list 600 only those element names within the geographic area of interest. Optionally, if the user has made any refinements to the coarse geographic area of interest, only elements that are within the refined geographic area of interest are appended to word subset list 600.

The word subset list 600 of FIGs. 3 and 5 represents an illustrative output format for word filtering mechanism 102. Alternatively or additionally, the output of word filtering mechanism 102 may be conceptualized as a computer-readable stream of words representing one or more elements in a geographic area of interest. This stream, illustratively in text format, is compatible with at least one of a speech recognition engine or a voice browser embedding speech recognition mechanism 103 (FIG. 5). Optionally, word filtering mechanism 102 may reformat at least one of word subset list 600 or the computer-readable stream of words into a format such as an XML document, to provide a subset of words compatible with speech recognition mechanism 103.

Speech recognition mechanism 103 may be implemented at server 240 or at mobile device 250. In cases where speech recognition is performed at mobile device 250, the output from word filtering mechanism 102 (illustratively in the form of a stream of words corresponding to grammar subset list 600, FIG. 3) is sent from server 240 to mobile device 250. Word subset list 600 is then compiled by the recognition model compiler 213 at mobile device 250 to provide a speech recognition model for use by a speech recognition mechanism 103 responsive to the acoustic input mechanism 104. Speech recognition mechanism 103 then forwards recognized speech to the output mechanism 105 for generating an electronic output signal representing the recognized speech. Such an arrangement is advantageous because it reduces the burden on wireless communication resources. Transmissions between the server and the mobile device are reduced because only word subset list 600 needs to be communicated to the mobile device. The speech recognition steps can be performed at the mobile device with reference to word subset list 600, thereby enhancing the speed and efficiency of the speech recognition process.

If speech recognition is performed at server 240, then recognition model compiler 213 and speech recognition mechanism 103 are implemented at server 240 instead of at mobile device 250, wherein the output of speech recognition mechanism 103 is sent from server 240 to output mechanism 105 at mobile device 250.

The operational principles of the configurations shown in FIGs. 4 and 5 are best illustrated with reference to several illustrative scenarios. These scenarios clarify the location resolution process that will govern the filtering process performed by word filtering mechanism 102 in accordance with location data to be resolved. The scenarios consider use of any of several different types of inputs by which a location context will be determined.

Scenario One: Geographic area of interest to be determined by entered zip code and/or city. Zip code and/or city are entered into mobile device 250 by the user. Possible clients used by mobile device 250 to accept the entered zip code and/or city include a voice browser and/or a multimodal client. In the case of a phone call, the client is not the phone itself, but the voice browser (from the server point of view). Location data are provided in the form of a city and/or a zip code. The geographic area of interest corresponding to this location data is determined in the form of a city or zip code. In this case, location resolution is performed locally. The zip code and/or city are entered into mobile device 250 using DTMF keypresses and/or voice. An HTTP request is issued in response to the entered information after the information is received at input mechanism 201. In this case, word subset list 600 is generated by selecting a set of words and/or grammar pertaining to the entered city and/or zip code. The following steps are performed:

1. User connects to geographic data acquisition mechanism 101 using mobile device 250. If mobile device 250 represents a multimodal client, an HTTP request is made by the client to a document server of word filtering mechanism 102 (FIGs. 4 and 5). If mobile device 250 represents a wireless telephone, an http request is made by the voice browser ("speaking" with the telephone) to the document server of word filtering mechanism 102.

2. A first page is loaded into mobile device 250 or loaded onto the voice browser. The page is prompting the user to enter a zip code. The zip code by either be entered by DTMF (touch tones) or by voice. The grammar used to recognize the zip code is static.

3. The user enters the zip code into input mechanism 201. A second HTTP request is made by the client, with the zip code value as a parameter. As location-based service 203 is not employed in this scenario to resolve the location, location resolution is "local". The geographic area of interest is evaluated at geographic area of interest defining mechanism 204, and no further refinement of the geographical area of interest takes place.

4. A second page is loaded into mobile device 250 (the "reduced" page). The document server of word filtering mechanism 102 computes reduced grammars associated with the page in the form of word subset list 600.

5. The user can vocally interact with the page over mobile device 250, as the page is optimized for its location

Note: The geometry specification refinement mechanism 205 is not used in this scenario. If this mechanism were to be used, a "remote" location resolution must be performed so as to enable sending a map (for example) back to the multimodal client of mobile device 250.

Scenario Two: Geographic area of interest to be determined automatically using Caller ID or Cell ID.

Possible clients used by mobile device 250 for Caller Id or Cell ID include a voice browser and/or a multimodal client. Location data are provided in the form of a caller ID or cell ID parameter. The geographic area of interest is determined as a zip code or as an area ID that identifies a geographic area. Location resolution is performed remotely, not locally. Input mechanism 201 is not employed for purposes of location resolution. Mobile device 250 is programmed to issue an HTTP request while a first page is retrieved from a document server of word filtering mechanism 102. In this scenario, words and/or grammar from element database 500 are filtered to prepare word subset list 600 based upon ANI or Cell-ID information. Input mechanism 201 is completely transparent, in the sense that the request that trims the word filtering process appears at the first stage of the interaction, and there is no need of a data collecting stage, as in the previous scenario. The HTTP request can be issued by a voice browser (that provides ANI info) or a multimodal client at mobile device 250.

The following operational sequence is performed:

1. User connects to geographic data acquisition mechanism 101 using mobile device 250. If the user is using a multimodal client at mobile device 250, an HTTP request is made by the client to the document server of word filtering mechanism 102. If mobile device 250 is a wireless telephone, an http request is made by the voice browser ("speaking" with the telephone) to the document server of word filtering mechanism 102. The ANI and/or the Cell ID are passed to the document server as part of the HTTP request. Location-based service 203 determines the geographic area of interest, in this case following the remote path indicated in FIG. 5 which commences at mechanism 202. Location-based service also determines geographic position of the user, an area of uncertainty with respect to the user's position, and one or more associated zip codes.

2. A page is downloaded to mobile device 250 or loaded onto the voice browser. The geographic context is used by word filtering mechanism 102 to compute a word subset list 600 associated with the page in accordance with the previously determined geographic area of interest.

3. The user can vocally interact with the page using mobile device 250. The page is optimized for the user's geographic area of interest.

Scenario Three: Geographic area of interest to be determined automatically using GPS data. Possible clients used by mobile device 250 for GPS include a multimodal client. Location data are provided in the form of GPS coordinates. The geographic area of interest is determined as a zip code, as (x,y) or (x,y,z) coordinates, optionally incorporating an area of uncertainty. Location resolution is performed locally, not remotely. Input mechanism 201 is not employed to determine geographic area of interest. An HTTP request is issued by mobile device 250 during the first page fetch. In this case, word filtering mechanism 102 is preparing a word subset list 600 by filtering element database 500 using GPS data. Input mechanism 201 is transparent, in the sense that the HTTP request that results in word filtering appears at the first stage of the interaction. Unlike the first scenario, there is no need for a data collecting stage. The following steps are performed:

1. User connects to geographic data acquisition mechanism 101 using mobile device 250. If mobile device 250 utilizes a multimodal client, an HTTP request is made by the client to a document server of word filtering mechanism 102. The GPS information is sent as part of the http request. Location-based service 203 determines the geographic area of interest by adding coarse localization to the GPS information, and the coarse localization is sent to geographic area of interest defining mechanism 204.

2. A page is downloaded to mobile device 250: The geographic area of interest in the form of the coarse and/or refined localization received at geographic area of interest defining mechanism 204 is used by word filtering mechanism 102 to compute a word subset list 600 and to place the word subset list into a page that is sent to mobile device 250, using the two-step filtering process described above.

3. The user can vocally interact with the page, optimized for the geographic area of interest. Note:

1. In cases where geometry specification refinement mechanism 205 is employed, an intermediate page is downloaded to mobile device 250, asking to the user to precise its area of interest (before step 2):

1.a - An intermediate (i.e., "localization") page is downloaded to mobile device 250.

1.b - The user inputs an area of interest into mobile device 250.

1.c - A refined geographic area of interest is sent by mobile device 250 and incorporated into the geographic area of interest defined by geographic area of interest defining mechanism 204.

In contrast to prior art techniques, the present invention does not employ acoustic models to improve speech recognition accuracy. Instead, the invention reduces the total number of words that need to be considered by a speech recognition algorithm. The number of words is reduced by excluding words that do not relate to a geographic area of interest. In this manner, the reduced processing burden makes it possible to handle speech recognition at the handset. Moreover, the accuracy of the speech recognition algorithm is improved.

To summarize, the advantages of the invention include more accurate speech recognition due to utilization of a database that has been reduced in size (i.e., word subset list 600). The burden on communication resources is decreased by sending the reduced database to the handset, whereupon the handset performs speech recognition using only the reduced size database instead of a much larger database. The decreased burden on communication resources results in faster, more efficient speech recognition.

Thus, while there have been shown and described novel features of the invention as applied to embodiments thereof, it will be understood that various omissions and substitutions and changes in the form and details of the devices illustrated, and in their operation, may be made by those skilled in the art without departing from the scope of the invention, which is solely defined by the appended claims. For example, although an embodiment of the invention was described in terms of a user refining an automatically determined geographic area of interest, it is also possible for a user to augment an automatically determined coarse geographic area of interest.

In view of the foregoing, it is expressly intended that all combinations of those elements and/or method steps which perform substantially the same function in substantially the same way to achieve the same results may be incorporated in any other disclosed or described or suggested form or embodiment as a general matter of design choice in as much as they fall within the scope of the claims appended hereto.

## Claims

1. A method for use with a mobile handset equipped to communicate with a remote server over a wireless communications network, the remote server equipped to access an element database (500) including words that describe elements at each of a plurality of geographically defined locations, the method comprising the steps of:
determining (202) geographic data for the mobile handset following a request; and
using (102) the determined geographic data to automatically select by the remote server a subset (600) of words for use with a speech recognition procedure;
wherein the subset of words is selected from the element database, thereby reducing the number of words used in the speech recognition procedure.

2. The method of claim 1 wherein the determined geographic data includes at least one of global positioning system (GPS) position data, cell identity (Cell-ID) data, caller identification (Caller ID) data, place name data, or zip code data.

3. The method of claim 1 wherein the geographic data are derived from a signal received from the mobile handset, said signal being related to a current position of said mobile handset or to a manual input entered into said mobile handset.

4. The method of any preceding claim wherein the elements include at least one of street names, businesses, merchants, points of interest, transportation facilities, individual households, activities, or landmarks.

5. The method of any preceding claim wherein the mobile handset receives the subset of words from the remote server and executes the speech recognition procedure based upon the received subset of words, thereby reducing use of the communications network and the remote server.

6. A speech recognition system comprising:
a mobile handset equipped to communicate with a remote server over a wireless network,
a data acquisition mechanism (101) for determining geographic data for the mobile handset following a request input; and
a selection mechanism (102) for using the determined geographic data to automatically select a subset of words (106) for use with a speech recognition procedure;
wherein the subset of words is selected by the remote server from an element database (500) said remote server has access to, said element database including words that describe elements at each of a plurality of geographically defined locations, thereby reducing the number of words used in the speech recognition procedure.

7. The speech recognition system of claim 6 wherein the geographic data are derived from a signal received from the mobile handset, said signal being related to a current position of said mobile handset or to a manual input entered into said mobile handset.

8. The speech recognition system of claim 6 wherein the determined geographic data includes at least one of global positioning system (GPS) position data, cell identity (Cell-ID) data, caller identification (Caller ID) data, place name data, or zip code data.

9. The speech recognition system of any of claims 6 to 8 wherein the elements include at least one of street names, businesses, merchants, points of interest, transportation facilities, individual households, activities, or landmarks.

10. A speech recognition system for associating received speech with words retrieved from an element database, the system comprising:
means for determining a geographic area of interest following a request wherein speech is to be received, said means further comprising:
(i) a portable location determining mechanism associated with a mobile handset for generating an indication signal indicative of current geographic location, and
(ii) a server, in communication with the portable location determining mechanism, programmed to determine a geographic area of interest from the indication signal;
means for selecting a subset of words from the element database based upon the geographic area of interest; said means comprising the server programmed to extract from the element database only words that are associated with the geographic area of interest; and,
means for associating the received speech with words selected from the subset of words, said means being implemented on the mobile handset.

11. The speech recognition system of claim 10 further comprising:
means for accepting a signal from at least one graphical user interface for selecting a portion of the determined geographic area of interest to thereby specify a further limited geographic area of interest; and
means for further reducing the subset of words according to the further limited geographic area of interest to generate a further subset of words, such that the means for associating received speech with words only selects words from the further subset of words.

12. The speech recognition system of claim 11 wherein the means for accepting a signal includes:
an electronic display for displaying a map of the determined geographic area of interest; and
a processing mechanism for combining the accepted signal with the map of the determined geographic area of interest so as to cause a display of the further limited geographic area of interest on the electronic display.

13. A mobile handset (250) comprising speech recognition means for association of received speech with words received from a remote database, the mobile handset comprising:
means for receiving a request;
means for providing a signal representing a geographic area of interest following said request;
means for transmitting said signal to a remote server and for receiving from the remote server a subset of words from the remote database based upon the geographic area of interest; and
means for associating the received speech with words selected from the subset of words.

14. The mobile handset of claim 13 wherein the means for providing a signal comprises means for determining a geographic area of interest wherein speech is to be received.

15. The mobile handset of claim 13 or 14 further comprising:
means (201) for accepting at least one input used to determine a refined geographic area of interest in the geographic area of interest;
means (205) for reducing the subset of words according to the refined geographic area of interest;
and wherein:
the means for associating the received speech is arranged for association of speech only with the reduced subset of words.

## Patentansprüche

1. Verfahren zur Verwendung mit einem mobilen Handapparat, der dafür ausgestattet ist, über ein drahtloses Kommunikationsnetz mit einem abgesetzten Server zu kommunizieren, wobei der abgesetzte Server dafür ausgestattet ist, auf eine Elementdatenbank (500) zuzugreifen, die Wörter enthält, die Elemente an jedem von mehreren geographisch definierten Orten beschreiben, wobei das Verfahren die folgenden Schritte umfaßt:
Bestimmen (202) geographischer Daten für den mobilen Handapparat nach einer Anforderung und Verwenden (102) der bestimmten geographischen Daten zum automatischen Auswählen einer Teilmenge (600) von Wörtern zur Verwendung mit einer Spracherkennungsprozedur durch den abgesetzten Server;
wobei die Teilmenge von Wörtern aus der Elementdatenbank ausgewählt wird, wodurch die Anzahl der in der Spracherkennungsprozedur verwendeten Wörter reduziert wird.

2. Verfahren nach Anspruch 1, wobei die bestimmten geographischen Daten Positionsdaten des globalen Navigationssystems (GPS) und/oder Daten der Zellenidentität (Cell-ID) und/oder Daten der Anruferidentifikation (Caller ID) und/oder Städtenamendaten und/oder Postleitzahldaten umfassen.

3. Verfahren nach Anspruch 1, wobei die geographischen Daten aus einem aus dem mobilen Handapparat empfangenen Signal abgeleitet werden, wobei das Signal eine aktuelle Position des mobilen Handapparats oder eine in den mobilen Handapparat eingegebene manuelle Eingabe betrifft.

4. Verfahren nach einem der vorhergehenden Ansprüche, wobei die Elemente Straßennamen und/oder Unternehmen und/oder Händler und/oder interessierende Punkte und/oder Transporteinrichtungen und/oder individuelle Haushalte und/oder Aktivitäten und/oder Sehenswürdigkeiten umfassen.

5. Verfahren nach einem der vorhergehenden Ansprüche, wobei der mobile Handapparat die Teilmenge von Wörtern von dem abgesetzten Server empfängt und auf der Basis der empfangenen Teilmenge von Wörtern die Spracherkennungsprozedur ausführt und **dadurch** die Benutzung des Kommunikationsnetzes und des abgesetzten Servers reduziert.

6. Spracherkennungssystem, umfassend:
einen mobilen Handapparat, der dafür ausgestattet ist, über ein drahtloses Netz mit einem abgesetzten Server zu kommunizieren,
einen Datenbeschaffungsmechanismus (101) zum Bestimmen von geographischen Daten für den mobilen Handapparat nach einer Anforderungseingabe und
einen Auswahlmechanismus (102) zum Verwenden der bestimmten geographischen Daten zum automatischen Auswählen einer Teilmenge von Wörtern (106) zur Verwendung mit einer Spracherkennungsprozedur;
wobei die Teilmenge von Wörtern durch den abgesetzten Server aus einer Elementdatenbank (500) ausgewählt wird, zu der der abgesetzte Server Zugang hat, wobei die Elementdatenbank Wörter enthält, die Elemente an jedem von mehreren geographisch definierten Orten beschreiben, wodurch die Anzahl der bei der Spracherkennungsprozedur verwendeten Wörter reduziert wird.

7. Spracherkennungssystem nach Anspruch 6, wobei die geographischen Daten aus einem aus dem mobilen Handapparat empfangenen Signal abgeleitet werden, wobei das Signal eine aktuelle Position des mobilen Handapparats oder eine in den mobilen Handapparat eingegebene manuelle Eingabe betrifft.

8. Spracherkennungssystem nach Anspruch 6, wobei die bestimmten geographischen Daten Positionsdaten des globalen Navigationssystems (GPS) und/oder Daten der Zellenidentität (Cell-ID) und/oder Daten der Anruferidentifikation (Caller ID) und/oder Städtenamendaten und/oder Postleitzahldaten umfassen.

9. Spracherkennungssystem nach einem der Ansprüche 6 bis 8, wobei die Elemente Straßennamen und/oder Unternehmen und/oder Händler und/oder interessierende Punkte und/oder Transporteinrichtungen und/oder individuelle Haushalte und/oder Aktivitäten und/oder Sehenswürdigkeiten umfassen.

10. Spracherkennungssystem zum Assoziieren von empfangener Sprache mit aus einer Elementdatenbank abgerufenen Wörtern, wobei das System folgendes umfaßt:
Mittel zum Bestimmen eines interessierenden geographischen Gebiets nach einer Aufforderung, wobei Sprache zu empfangen ist, wobei die Mittel ferner folgendes umfassen:
i) einen mit einem mobilen Handapparat assoziierten tragbaren Ortsbestimmungsmechanismus zum Erzeugen eines Anzeigesignals, das einen aktuellen geographischen Ort anzeigt und
ii) einen mit dem tragbaren Ortsbestimmungsmechanismus kommunizierenden Server, der dafür programmiert ist, aus dem Anzeigesignal ein interessierendes geographisches Gebiet zu bestimmen;
Mittel zum Auswählen einer Teilmenge von Wörtern aus der Elementdatenbank auf der Basis des interessierenden geographischen Gebiets; wobei die Mittel den Server umfassen, der dafür programmiert ist, aus der Elementdatenbank nur Wörter zu extrahieren, die mit dem interessierenden geographischen Gebiet assoziiert sind und
Mittel zum Assoziieren der empfangenen Sprache mit aus der Teilmenge von Wörtern ausgewählten Wörtern, wobei die Mittel auf dem mobilen Handapparat implementiert sind.

11. Spracherkennungssystem nach Anspruch 10, ferner umfassend:
Mittel zum Annehmen eines Signals von mindestens einer graphischen Benutzeroberfläche zum Auswählen eines Teils des bestimmten interessierenden geographischen Gebiets, um **dadurch** ein weiter eingeschränktes interessierendes geographisches Gebiet zu spezifizieren und
Mittel zum weiteren Reduzieren der Teilmenge von Wörtern gemäß dem weiter eingeschränkten interessierenden geographischen Gebiet, um eine weitere Teilmenge von Wörtern zu erzeugen, dergestalt, daß die Mittel zum Assoziieren empfangener Sprache mit Wörtern nur Wörter aus der weiteren Teilmenge von Wörtern auswählen.

12. Spracherkennungssystem nach Anspruch 11, wobei die Mittel zum Annehmen eines Signals folgendes umfassen:
ein elektronisches Display zum Anzeigen einer Karte des bestimmten interessierenden geographischen Gebiets und
einen Verarbeitungsmechanismus zum Kombinieren des angenommenen Signals mit der Karte des bestimmten interessierenden geographischen Gebiets, um so eine Anzeige des weiter eingeschränkten interessierenden geographischen Gebiets auf dem elektronischen Display zu bewirken.

13. Mobiler Handapparat (150) mit Spracherkennungsmitteln zum Assoziieren empfangener Sprache mit aus einer abgesetzten Datenbank empfangenen Wörtern, wobei der mobile Handapparat folgendes umfaßt:
Mittel zum Empfangen einer Anforderung;
Mittel zum Bereitstellen eines Signals, das ein interessierendes geographisches Gebiet repräsentiert, nach der Anforderung;
Mittel zum Senden des Signals zu einem abgesetzten Server und zum Empfangen einer Teilmenge von Wörtern aus der abgesetzten Datenbank von dem abgesetzten Server auf der Basis des interessierenden geographischen Gebiets und
Mittel zum Assoziieren der empfangenen Sprache mit aus der Teilmenge von Wörtern ausgewählten Wörtern.

14. Mobiler Handapparat nach Anspruch 13, wobei die Mittel zum Bereitstellen eines Signals Mittel zum Bestimmen eines interessierenden geographischen Gebiets umfaßt, worin Sprache empfangen werden soll.

15. Mobiler Handapparat nach Anspruch 13 oder 14, ferner umfassen:
Mittel (210) zum Annehmen mindestens einer Eingabe, mit der ein verfeinertes interessierendes geographisches Gebiet in dem interessierenden geographischen Gebiet bestimmt wird;
Mittel (205) zum Reduzieren der Teilmenge von Wörtern gemäß dem verfeinerten interessierenden geographischen Gebiet und wobei
die Mittel zum Assoziieren der empfangenen Sprache dafür ausgelegt sind, Sprache nur mit der reduzierten Teilmenge von Wörtern zu assoziieren.

## Revendications

1. Procédé pour une utilisation avec un combiné mobile équipé pour communiquer avec un serveur distant sur un réseau de communication sans fil, le serveur distant étant équipé pour accéder à une base de données d'éléments (500) comprenant des mots qui décrivent des éléments pour chacun d'une pluralité d'emplacements définis géographiquement, le procédé comprenant les étapes de :
détermination (202) de données géographiques pour le combiné mobile suite à une demande ; et
utilisation (102) des données géographiques déterminées pour sélectionner automatiquement par le serveur distant un sous-ensemble (600) de mots pour une utilisation avec une procédure de reconnaissance vocale ;
dans lequel le sous-ensemble de mots est sélectionné parmi la base de données d'éléments, réduisant de ce fait le nombre de mots utilisés dans la procédure de reconnaissance vocale.

2. Procédé selon la revendication 1 dans lequel les données géographiques déterminées comprennent au moins une parmi des données de position du système de positionnement mondial (GPS), des données d'identité de cellule (identifiant de cellule), des données d'identification d'appelant (identifiant d'appelant), des données de nom de lieu ou des données de code postal.

3. Procédé selon la revendication 1 dans lequel les données géographiques sont déduites d'un signal reçu du combiné mobile, ledit signal étant lié à une position actuelle dudit combiné mobile ou à une entrée manuelle entrée dans ledit combiné mobile.

4. Procédé selon une revendication précédente quelconque dans lequel les éléments comprennent au moins un parmi des noms de rues, des entreprises, des commerçants, des centres d'intérêt, des installations de transport, des maisons individuelles, des activités ou des points de repère.

5. Procédé selon une revendication précédente quelconque dans lequel le combiné mobile reçoit le sous-ensemble de mots du serveur distant et exécute la procédure de reconnaissance vocale sur la base du sous-ensemble reçu de mots, réduisant de ce fait l'utilisation du réseau de communication et du serveur distant.

6. Système de reconnaissance vocale comprenant :
un combiné mobile équipé pour communiquer avec un serveur distant sur un réseau sans fil ;
un mécanisme d'acquisition de données (101) pour déterminer des données géographiques pour le combiné mobile suite à une entrée de demande ; et
un mécanisme de sélection (102) pour utiliser les données géographiques déterminées afin de sélectionner automatiquement un sous-ensemble de mots (106) pour une utilisation avec une procédure de reconnaissance vocale ;
dans lequel le sous-ensemble de mots est sélectionné par le serveur distant à partir d'une base de données d'éléments (500) à laquelle ledit serveur distant a accès, ladite base de données d'éléments comprenant des mots qui décrivent des éléments pour chacun d'une pluralité d'emplacements définis géographiquement, réduisant de ce fait le nombre de mots utilisés dans la procédure de reconnaissance vocale.

7. Système de reconnaissance vocale selon la revendication 6 dans lequel les données géographiques sont déduites d'un signal reçu du combiné mobile, ledit signal étant lié à une position actuelle dudit combiné mobile ou à une entrée manuelle entrée dans ledit combiné mobile.

8. Système de reconnaissance vocale selon la revendication 6 dans lequel les données géographiques déterminées comprennent au moins une parmi des données de position du système de positionnement mondial (GPS), des données d'identité de cellule (identifiant de cellule), des données d'identification d'appelant (identifiant d'appelant), des données de nom de lieu ou des données de code postal.

9. Système de reconnaissance vocale selon l'une quelconque des revendications 6 à 8 dans lequel les éléments comprennent au moins un parmi des noms de rues, des entreprises, des commerçants, des centres d'intérêt, des installations de transport, des maisons individuelles, des activités ou des points de repère.

10. Système de reconnaissance vocale pour associer une voix reçue à des mots récupérés d'une base de données d'éléments, le système comprenant :
des moyens pour déterminer une zone géographique d'intérêt suite à une demande dans laquelle une voix doit être reçue, lesdits moyens comprenant en outre :
(i) un mécanisme de détermination d'emplacement de portable associé à un combiné mobile pour générer un signal d'indication révélateur d'un emplacement géographique actuel, et
(ii) un serveur, en communication avec le mécanisme de détermination d'emplacement de portable, programmé pour déterminer une zone géographique d'intérêt à partir du signal d'indication ;
des moyens pour sélectionner un sous-ensemble de mots parmi la base de données d'éléments sur la base de la zone géographique d'intérêt ; lesdits moyens comprenant le serveur programmé pour extraire de la base de données d'éléments seulement des mots qui sont associés à la zone géographique d'intérêt ; et
des moyens pour associer la voix reçue à des mots sélectionnés parmi le sous-ensemble de mots, lesdits moyens étant mis en oeuvre sur le combiné mobile.

11. Système de reconnaissance vocale selon la revendication 10 comprenant en outre :
des moyens pour accepter un signal d'au moins une interface utilisateur graphique pour sélectionner une partie de la zone géographique d'intérêt déterminée afin de spécifier de ce fait une zone géographique d'intérêt limitée supplémentaire ; et
des moyens pour réduire en outre le sous-ensemble de mots selon la zone géographique d'intérêt limitée supplémentaire afin de générer un sous-ensemble supplémentaire de mots, de telle sorte que les moyens pour associer une voix reçue à des mots sélectionnent seulement des mots parmi le sous-ensemble supplémentaire de mots.

12. Système de reconnaissance vocale selon la revendication 11 dans lequel les moyens pour accepter un signal comprennent :
un affichage électronique pour afficher une carte de la zone géographique d'intérêt déterminée ; et
un mécanisme de traitement pour combiner le signal accepté avec la carte de la zone géographique d'intérêt déterminée de façon à provoquer un affichage de la zone géographique d'intérêt limitée supplémentaire sur l'affichage électronique.

13. Combiné mobile (250) comprenant des moyens de reconnaissance vocale pour une association d'une voix reçue à des mots reçus d'une base de données distante, le combiné mobile comprenant :
des moyens pour recevoir une demande ;
des moyens pour fournir un signal représentant une zone géographique d'intérêt suite à ladite demande ;
des moyens pour transmettre ledit signal à un serveur distant et recevoir du serveur distant un sous-ensemble de mots provenant de la base de données distante sur la base de la zone géographique d'intérêt ; et
des moyens pour associer la voix reçue à des mots sélectionnés parmi le sous-ensemble de mots.

14. Combiné mobile selon la revendication 13 dans lequel les moyens pour fournir un signal comprennent des moyens pour déterminer une zone géographique d'intérêt dans laquelle une voix doit être reçue.

15. Combiné mobile selon la revendication 13 ou 14 comprenant en outre:
des moyens (201) pour accepter au moins une entrée utilisée pour déterminer une zone géographique affinée d'intérêt dans la zone géographique d'intérêt ;
des moyens (205) pour réduire le sous-ensemble de mots selon la zone géographique affinée d'intérêt;
et dans lequel :
les moyens pour associer la voix reçue sont agencés pour une association d'une voix seulement avec le sous-ensemble réduit de mots.
